# EUROPEAN PATENT APPLICATION

(11) **EP 4 333 344 A1**
(43) Date of publication of application: **06.03.2024**
(21) Application number: 23191843.4
(22) Date of filing: 17.08.2023
(51) Int. Cl.: H04L 5/00

(54) **METHOD OF COMMUNICATION OPERATION PERFORMED BY USER EQUIPMENT AND APPARATUS USING THE SAME**

(30) Priority: 19.08.2022 US 202263399221 P
(71) Applicant: Industrial Technology Research Institute, Chutung, Hsinchu 310401 (TW)
(72) Inventor: Hsieh, Chia-Wen, 310017 Hsinchu County (TW); Lee, Chien-Min, 324 Taoyuan City (TW); Lo, Li-Chung, 407 Taichung City (TW)
(74) Representative: Kurig, Thomas

(57) **Abstract**

A method of communication operation performed by a user equipment (320) is provided. The method comprises: receiving a configuration (S400), wherein the configuration comprises a resource setting; receiving at least one resource (S410), wherein the at least one resource is configured via the configuration; performing channel state information (CSI) measurement (S420), wherein CSI measurement is related to the at least one resource.

## Description

### BACKGROUND

### Technical Field

The disclosure relates to a method of channel state information (CSI) measurement and CSI report for network energy saving and an apparatus using the same.

### Description of Related Art

As mentioned in Document [1], network energy saving is of great importance for environmental sustainability, to reduce environmental impact (greenhouse gas emissions), and for operational cost savings. As 5G is becoming pervasive across industries and geographical areas, handling more advanced services and applications requiring very high data rates (e.g. XR), networks are being denser, use more antennas (e.g. MIMO enhancement), larger bandwidths and more frequency bands. The environmental impact of 5G needs to stay under control, and novel solutions to improve network energy savings need to be developed.

Document [1]: RP-223540, New WID: Network energy savings for NR, Huawei [RAN Meeting #98-e]

In the current communication system, network energy saving methods can be achieved by adaptation of transmission power and adaptation of number of spatial elements.

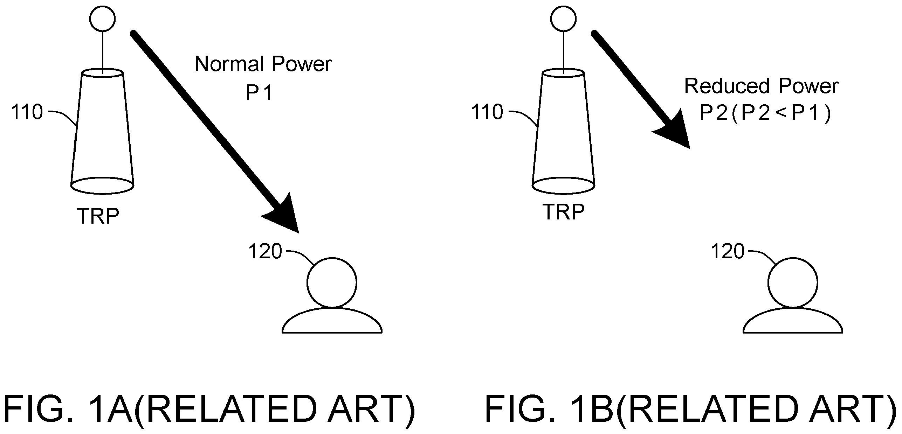

FIG. 1A and FIG. 1B are schematic diagrams illustrating adaptation of transmission power. gNB (gNode B) performs transmission power adaption via semi-static manner. TRP (TRansmission Points) 110 transmits a normal power P1 to a UE 120 in FIG. 1A. TRP 110 transmits a reduced power P2 to the UE 120 in FIG. 1B, where the reduced power P2 is smaller than the normal power P1.

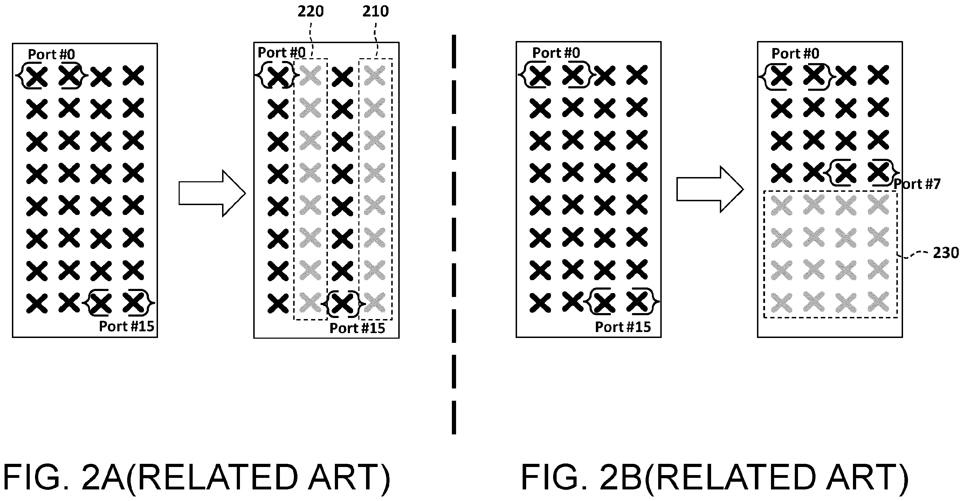

FIG. 2A and FIG. 2B are schematic diagrams illustrating adaptation of number of spatial elements. gNB mutes some spatial elements or ramps up the spatial elements via semi-static manner. RRC (re)configuration is needed for UE to adapt the number of spatial elements. For example, some antenna elements 210 and 220 are muted, but antenna ports are not muted (antenna port number remains the same) in FIG. 2A. In another example, antenna elements 230 are muted; and thus some antenna ports are muted (antenna port number is changed) in FIG. 2B.

The current communication system may have some problems as follows. Traffic arrival, traffic buffer status, and the channel condition cannot be tracked timely if the adaptation is applied via semi-static manner. It may cause transmission delay or performance reduction due to the semi-static manner. Instead of semi-static manner, the other adaptation manner can be considered (e.g. dynamic adaptation as agreed in RANI meeting).

### SUMMARY

The disclosure provides a method of communication operation performed by a user equipment (UE). The method comprises: receiving a configuration, wherein the configuration comprises a resource setting; receiving at least one resource, wherein the at least one resource is configured via the configuration; performing channel state information (CSI) measurement, wherein CSI measurement is related to the at least one resource. The UE shall derive the channel measurements for computing CSI value reported in an uplink slot based at least one resource associated with the resource setting.

The disclosure provides an apparatus for a communication operation. The apparatus comprises one or more receivers, one or more transmitters, a memory storing instructions, and a processor. The processor executes the instructions. Execution of the instructions by the processor causes the processor to: receive a configuration, wherein the configuration comprises a resource setting; receive at least one resource, wherein the at least one resource is configured via the configuration; and perform channel state information (CSI) measurement, wherein CSI measurement is related to the at least one resource.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1A and FIG. 1B are schematic diagrams illustrating adaptation of transmission power.
FIG. 2A and FIG. 2B are schematic diagrams illustrating adaptation of number of spatial elements.
FIG. 3 is a schematic diagram illustrating dynamic adaptation of transmission power.
FIG. 4A is a block diagram illustrating an apparatus for a communication operation according to an embodiment of the disclosure.
FIG. 4B is a flowchart of a method of communication operation performed by a user equipment according to an embodiment of the disclosure.
FIG. 5 is a schematic diagram illustrating CSI report corresponding to CSI measurement, wherein CSI-RS measurement computed by more than one CSI-RS transmission occasions for one energy/power mode.
FIG. 6 is a schematic diagram illustrating CSI report corresponding to CSI measurement, wherein CSI-RS measurement computed by more than one CSI-RS transmission occasions according to an embodiment of the disclosure.
FIG. 7 and FIG. 8 respectively illustrate different schemes for CSI Measurement.
FIG. 9 is a schematic diagram illustrating CSI report corresponding to CSI measurement, wherein CSI-RS measurement computed by more than one CSI-RS transmission occasions according to a first embodiment of the disclosure.
FIG. 10 is a schematic diagram illustrating CSI report corresponding to CSI measurement, wherein CSI-RS measurement computed by more than one CSI-RS transmission occasions according to a second embodiment of the disclosure.
FIG. 11 is a schematic diagram illustrating CSI report corresponding to CSI measurement, wherein CSI-RS measurement computed by more than one CSI-RS transmission occasions according to a third embodiment of the disclosure.
FIG. 12 is a schematic diagram illustrating CSI report corresponding to CSI measurement, wherein CSI-RS measurement computed by more than one CSI-RS transmission occasions according to a fourth embodiment of the disclosure.
FIG. 13 shows CSI report configuration and CSI resource configuration can be associated with a mode.
FIG. 14 is a schematic diagram illustrating performing mode change via an indicator according to a fifth embodiment of the disclosure.
FIG. 15 is a schematic diagram illustrating performing mode change via activate/deactivate SPS CSI report configuration according to a sixth embodiment of the disclosure.
FIG. 16 is a schematic diagram illustrating CSI report corresponding to CSI measurement, wherein CSI-RS measurement computed by only one CSI-RS transmission occasion according to a seventh embodiment of the disclosure.
FIG. 17 and FIG. 18 are schematic diagrams illustrating dynamic adaptation of number of spatial elements.
FIG. 19 is a schematic diagrams illustrating handling CSI Report payload size due to different antenna port numbers.
FIG. 20 is a schematic diagrams illustrating CSI report payload size according to an eighth embodiment of the disclosure.
FIG. 21 is a schematic diagrams illustrating CSI report payload size according to a ninth embodiment of the disclosure.

### DESCRIPTION OF THE EMBODIMENTS

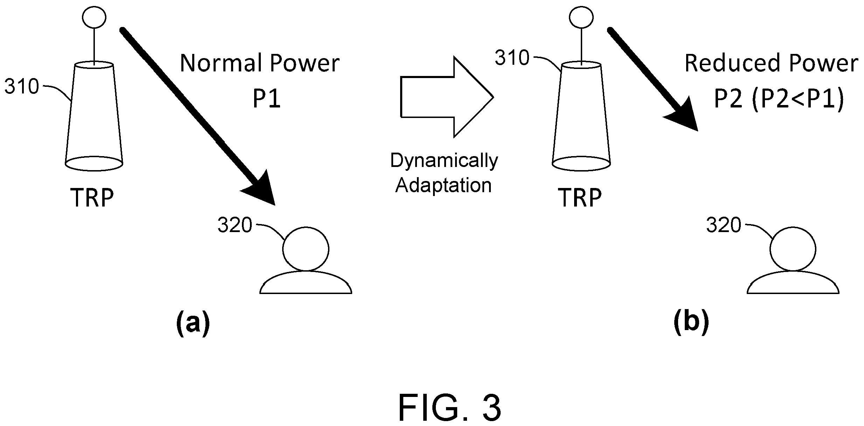

FIG. 3 is a schematic diagram illustrating dynamic adaptation of transmission power. For network energy saving, dynamic adaptation of transmission power can be considered. However, dynamic behavior may suffer some problems, e.g. coverage loss due to transmission power adaptation, which should be solved. A method of communication operation performed by a user equipment provided in the disclosure can at least solve said problems.

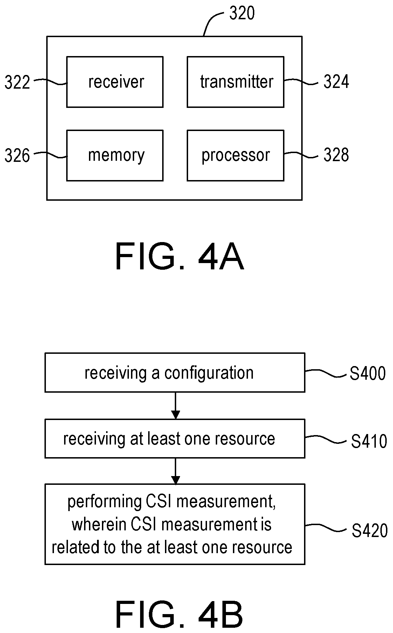

FIG. 4A is a block diagram illustrating an apparatus (e.g. a user equipment 320) for a communication operation according to an embodiment of the disclosure. FIG. 4B is a flowchart of the method of communication operation performed by the user equipment according to an embodiment of the disclosure. Referring to FIG. 3 to FIG. 4B, the user equipment 320 comprises one or more receivers 322, one or more transmitters 324, a memory 326, and a processor 328. The memory 326 stores instructions. The processor 328 executes the instructions. Execution of the instructions by the processor 328 causes the processor 328 to perform the method of communication operation as illustrated in FIG. 4B.

In step S400, the UE 320 receives a configuration. The configuration comprises a resource setting. In an embodiment, the configuration is configured via higher layer signaling. In step S410, the UE 320 receives at least one resource. The at least one resource is configured via the configuration. In an embodiment, the at least one resource comprises channel state information (CSI) - reference signal (RS) resource, non-zero power (NZP) CSI-RS resource and CSI - interference measurement (IM) resource. In step S420, the UE 320 performs channel state information (CSI) measurement, wherein CSI measurement is related to the at least one resource.

In an embodiment, the method of the disclosure may further comprises a step of performing CSI report corresponding to the CSI measurement by the UE 320. More details of the method of the disclosure will be described in the following description.

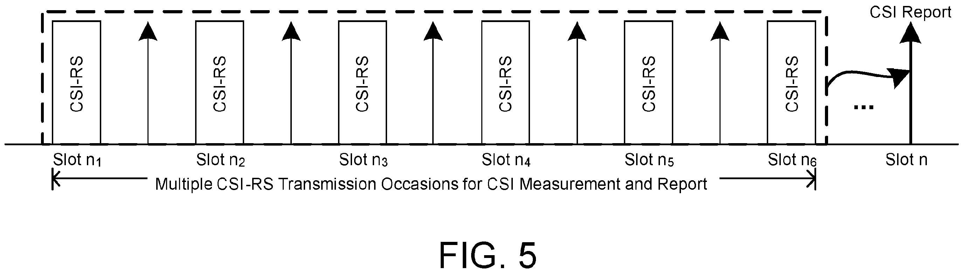

FIG. 5 is a schematic diagram illustrating CSI report corresponding to CSI measurement, wherein CSI-RS measurement computed by more than one CSI-RS transmission occasions for one energy/power mode. Multiple CSI-RS transmission occasions involve for CSI measurement and report. The UE performs CSI report corresponding CSI measurement in slot n.

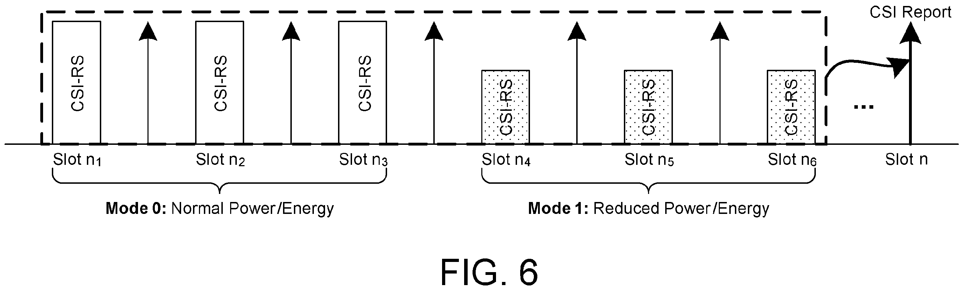

FIG. 6 is a schematic diagram illustrating CSI report corresponding to CSI measurement, wherein CSI-RS measurement computed by more than one CSI-RS transmission occasions according to an embodiment of the disclosure. The UE performs CSI report corresponding CSI measurement in slot n. How to perform CSI measurement and report when there are more than one energy/power modes will be described. More than two modes are not precluded.

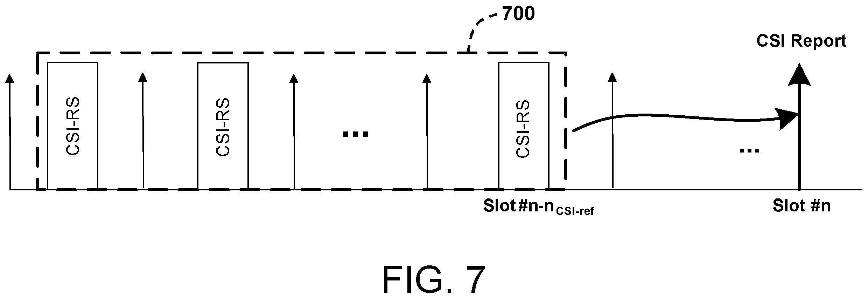

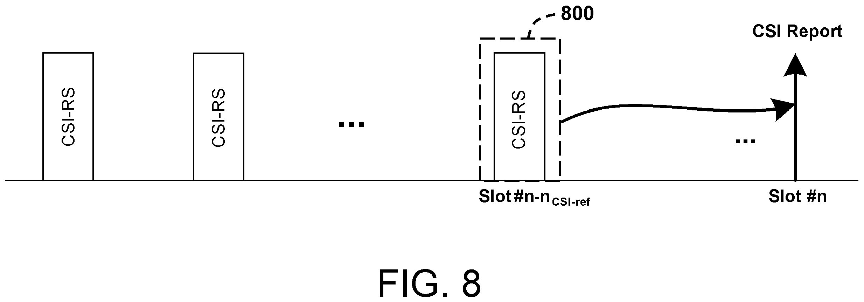

FIG. 7 and FIG. 8 respectively illustrate different schemes for CSI Measurement. In FIG. 7, if the higher layer parameter 'timeRestrictionForChannelMeasurements' is set to "notConfigured", the UE shall derive the channel measurements for computing CSI value reported in uplink slot n based on only the NZP CSI-RS resource 700, no later than the CSI reference resource. In FIG. 8, if the higher layer parameter 'timeRestrictionForChannelMeasurements' is set to "Configured", the UE shall derive the channel measurements for computing L1-RSRP value reported in uplink slot n based on only the most recent 800, no later than the CSI reference resource.

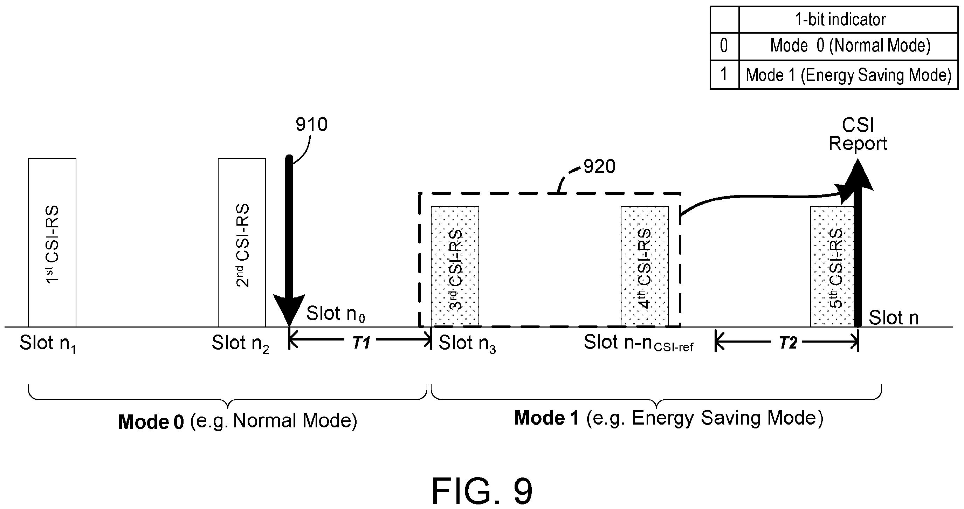

FIG. 9 is a schematic diagram illustrating CSI report corresponding to CSI measurement, wherein CSI-RS measurement computed by more than one CSI-RS transmission occasions according to a first embodiment of the disclosure.

Referring to FIG. 9, the first CSI-RS resource and the second CSI-RS resource are transmitted with normal power in a mode 0, e.g. a normal mode. The third CSI-RS resource, the fourth CSI-RS resource, and the fifth CSI-RS resource are transmitted with reduced power in a mode 1, e.g. an energy saving mode.

The UE receives an indicator 910 in slot n₀, and the indicator 910 comprises a mode. In an embodiment, the mode comprises an indication of power value, an indication of power level, an indication of antenna port number, an indication of antenna port subset, an indication of antenna element number, an indication of antenna element subset, a Cell-ID related information, a search space (SS) set index, a control resource set (CORESET) identity (ID), a search space configuration, and a first transmission configuration indication (TCI) state. In an embodiment, the mode is set to be a default mode if the indicator is not received. In an embodiment, the mode comprises a spatial adaptation pattern, wherein the spatial adaptation pattern comprises an indication of power value, an indication of power level, an indication of antenna port number, an indication of antenna port subset, an indication of antenna element number, an indication of antenna element subset, a Cell-ID, a SS set index, a CORESET ID, a search space configuration, and a TCI state. In the present embodiment, the indicator 910 may be 1-bit modes indicator. The bit value "0" indicates the mode 0, e.g. the normal mode, and the bit value "1" indicates the mode 1, e.g. the energy saving mode. In an embodiment, the indicator 910 is carried by physical layer signaling (e.g. DCI), or higher layer signaling (e.g. RRC or MAC CE). In an embodiment, the indicator 910 is carried by UE-specific, cell-specific, or group-UE specific signaling.

CSI-RS transmission power is changed after slot n₀+T1. T1 is an indicator activation time. The UE resets CSI-RS measurement process after slot n₀+T1. The dotted block 920 shows valid CSI-RS transmission occasions corresponding to CSI report after mode change. Valid CSI-RS transmission occasions are transmitted no later than slot n-T2. T2 is the smallest value corresponding to a valid downlink slot. CSI report is transmitted in slot n.

That is to say, after the UE is signaled to be changed its mode, the UE reports a CSI report only after receiving at least one CSI-RS transmission occasion for channel measurement and CSI-RS and/or CSI-IM occasion for interference measurement no later than CSI reference resource, and the UE drops CSI report otherwise. Therefore, CSI report corresponding to at least one valid resource is performed after the UE receives the indicator 910.

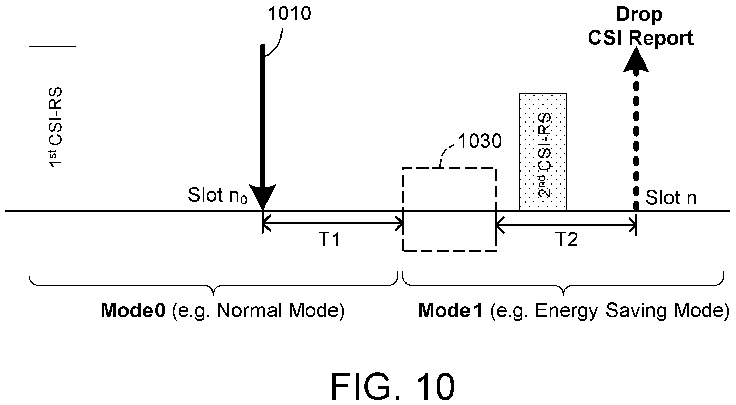

FIG. 10 is a schematic diagram illustrating CSI report corresponding to CSI measurement, wherein CSI-RS measurement computed by more than one CSI-RS transmission occasions according to a second embodiment of the disclosure.

Referring to FIG. 10, in the present embodiment, there is no valid CSI-RS transmission occasion after mode change. To be specific, the first CSI-RS resource is transmitted with normal power in the mode 0, and the second CSI-RS resource is transmitted with reduced power in the mode 1. The UE resets CSI-RS measurement process after slot n₀+T1. The dotted block 1030 shows no valid CSI-RS transmission occasions corresponding to CSI report after mode change. CSI report is dropped and not transmitted in slot n. That is to say, the UE stops performing CSI report if there is no valid resource after the UE receives an indicator.

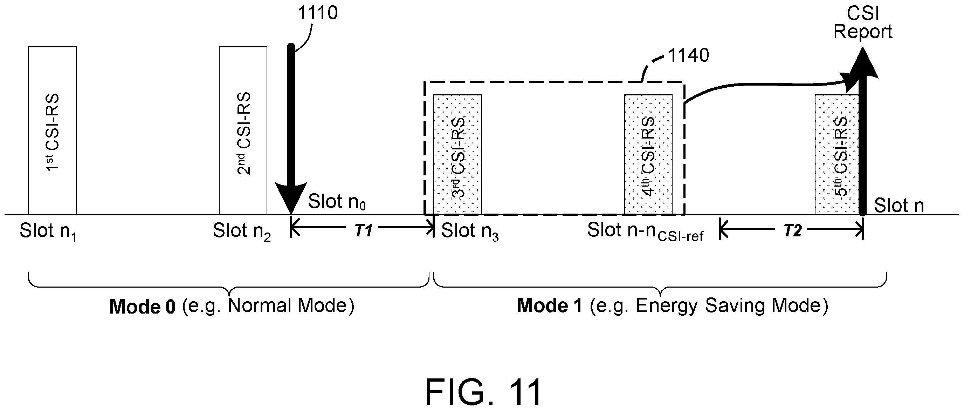

FIG. 11 is a schematic diagram illustrating CSI report corresponding to CSI measurement, wherein CSI-RS measurement computed by more than one CSI-RS transmission occasions according to a third embodiment of the disclosure.

Referring to FIG. 11, the third embodiment is similar to the first embodiment, and the main difference therebetween will be described. In the third embodiment, the UE receives the indicator 1110 in slot n₀ between the second CSI-RS resource and the third CSI-RS resource, which are transmitted in different modes. After the UE is signaled to be changed its mode, the UE reports a CSI report only after receiving at least one CSI-RS transmission occasion for channel measurement and CSI-RS and/or CSI-IM occasion for interference measurement no later than CSI reference resource. Otherwise, the UE measures the nearest valid CSI-RS and/or CSI-IM occasion for reporting as shown in the dotted block 1140. Therefore, CSI report corresponding to at least one valid resource is performed after the UE receives the indicator 1110. The UE is not expected to drop CSI report if there is at least one valid CSI-RS transmission occasion, even if it is not corresponding to the latest mode.

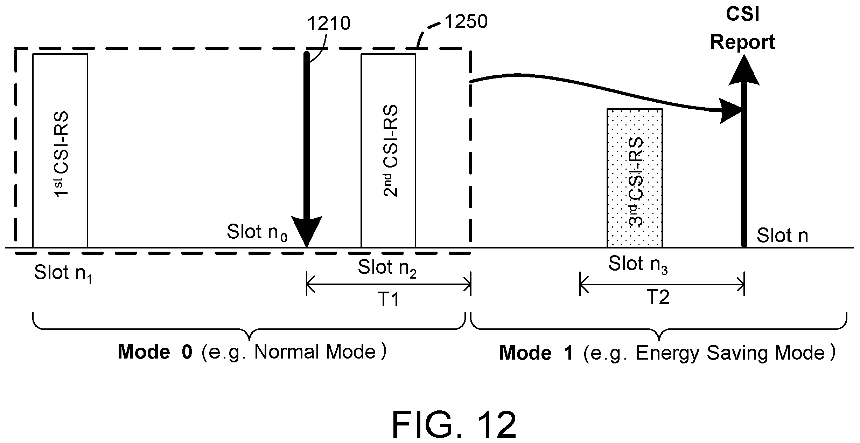

FIG. 12 is a schematic diagram illustrating CSI report corresponding to CSI measurement, wherein CSI-RS measurement computed by more than one CSI-RS transmission occasions according to a fourth embodiment of the disclosure.

Referring to FIG. 12, in the fourth embodiment, the UE receives the indicator 1210 in slot n₀ between the first CSI-RS resource and the second CSI-RS resource, which are transmitted in the same mode. For example, the second CSI-RS resource are transmitted in the indicator activation time T1, and CSI-RS transmission power is changed after slot n₀+T1. CSI report is transmitted in slot n. CSI report corresponding to at least one valid resource is performed after the UE receives the indicator 1210. The UE performs CSI report corresponding to at least one valid resource if there is no valid resource after the UE receives an indicator. Compared to the first and the second embodiments, the CSI report dropping is prevented in the third and the fourth embodiments.

In the fourth embodiments, the at least one resource can be associated with more than one modes. For example, in the fourth embodiment, the at least one resource transmitted in slot n₁ and slot n₂ is the first CSI-RS resource and the second CSI-RS resource, respectively. The first CSI-RS resource and the second CSI-RS resource are associated with the mode 0. The at least one resource transmitted in slot n₃ is the third CSI-RS resource. The third CSI-RS resource is associated with the mode 1. Since there is no valid resource after the UE receives an indicator, the UE performs CSI report corresponding to the nearest valid CSI-RS and/or CSI-IM occasion for reporting as shown in the dotted block 1250.

Scenarios Applicable to the first to the fourth embodiments are described as follows. In the first and the second embodiments, the UE is capable on receiving an indicator, e.g. an advanced UE. The UE monitors the indicator on UE-specific/Cell-specific/group UE-specific signaling. In this case, ACK/NACK feedback for the indicator may be needed. Dropping issue can be handled for both network and UE. Drop unnecessary CSI report (e.g. it has been reported by previous CSI report occasion) can save UE transmission power.

In the third and the fourth embodiments, the UE is capable on receiving an indicator, e.g. an advanced UE. The UE monitors the indicator on Cell-specific/group UE-specific/UE-specific signaling. In this case, there is no ACK/NACK feedback for the indicator. No dropping CSI report is beneficial for the third and the fourth embodiments. Always transmitting CSI report can prevent misunderstanding between network and UE; and thus, the reliability is increased.

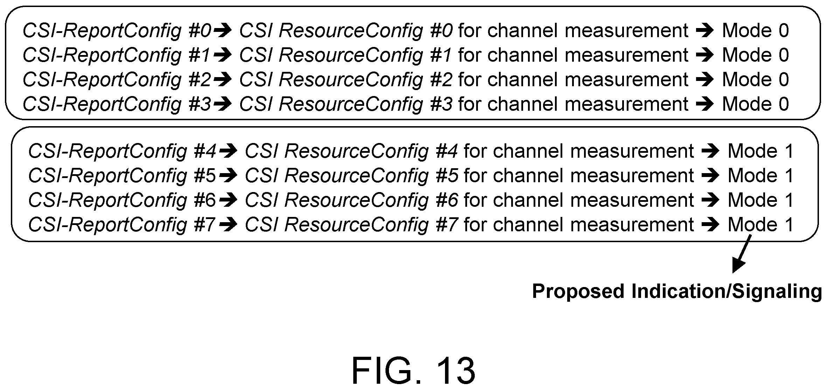

FIG. 13 shows CSI report configuration and CSI resource configuration can be associated with a mode. Changing the CSI report configuration may change its mode for measurement/report. *CSI-ReportConfig* specifies which of *CSI ResourceConfig* to be used for channel measurement wherein the *CSI-ReportConfig* is associated with a mode. The other associations are not precluded.

If the CSI report configuration is not associated with a mode, the following options can be considered: option 1: adopt a default, predetermined, preconfigured or fixed mode for CSI reporting, for example, the mode is set to be a default mode if the indicator is not received; option 2: adopt the first and the second embodiments for CSI reporting; and option 3: adopt the third and the fourth embodiments for CSI reporting.

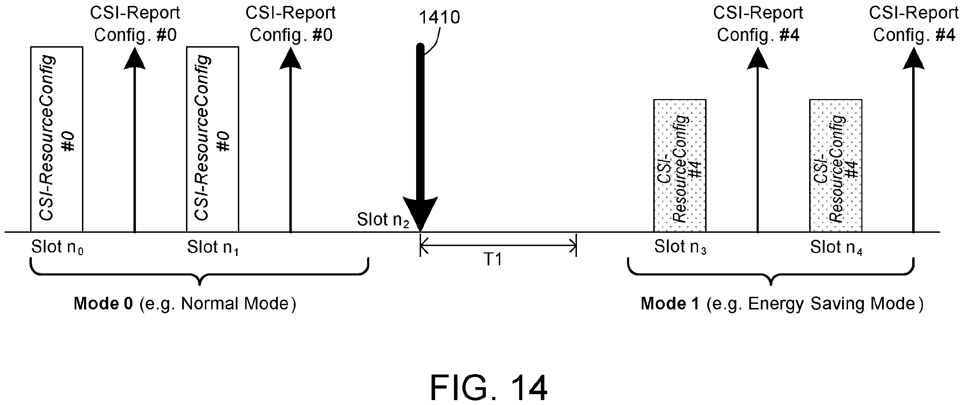

FIG. 14 is a schematic diagram illustrating performing mode change via an indicator according to a fifth embodiment of the disclosure. Referring to FIG. 14, CSI report configuration #0 is associated with the mode 0. CSI report configuration #0 specifies CSI resource configuration #0 is used for channel measurement. The UE may perform CSI report configuration #0 after the UE receives an indicator indicting the mode 0. The UE may stop CSI report configuration #0 after the UE receives an indicator not indicting the mode 0.

CSI report configuration #4 is associated with the mode 1. CSI report configuration #4 specifies CSI resource configuration #4 is used for channel measurement. The UE may perform CSI report configuration #4 after the UE receives an indicator indicting the mode 1. The UE may stop CSI report configuration #4 after the UE receives an indicator not indicting the mode 1. The UE may assume CSI report configuration #4 is transmitted only when the mode is the mode 1.

In the present embodiment, CSI resource configuration #0 is transmitted with the normal power in slots n₀ and n₁. The indicator 1410 is received in slot n₂. CSI resource configuration is changed after slot n₂+T1. CSI resource configuration #4 is transmitted with the reduced power in slots n₃ and n₄.

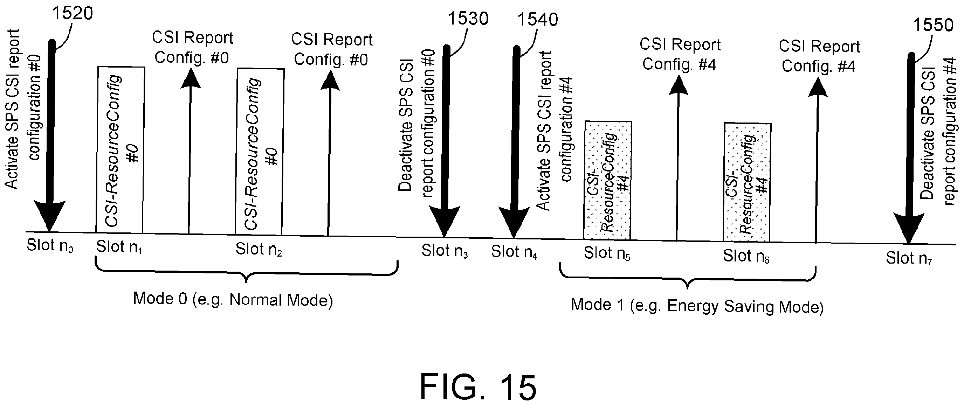

FIG. 15 is a schematic diagram illustrating performing mode change via activate/deactivate SPS CSI report configuration according to a sixth embodiment of the disclosure. Referring to FIG. 15, CSI report configuration #0 is associated with the mode 0. The UE receives an activation indicator 1520 for SPS CSI report configuration #0 in slot n₀. CSI resource configuration #0 is transmitted with the normal power in slots n₁ and n₂. The UE reports CSI report configuration #0 between slots n₀ and n₃. The UE receives a deactivation indicator 1530 for SPS CSI report configuration #0 in slot n₃.

CSI report configuration #4 is associated with the mode 1. The UE receives an activation indicator 1540 for SPS CSI report configuration #4 in slot n₄. CSI resource configuration #4 is transmitted with the reduced power in slots n₅ and n₆. The UE reports CSI report configuration #4 between slots n₄ and n₇. The UE receives a deactivation indicator 1550 for SPS CSI report configuration #4 in slot n₇.

In the present embodiment, SPS CSI reporting procedure is reused, and a newly defineded indicator is not needed. The method of communication operation is backward compatible, and a legacy UE is supported.

Scenarios Applicable to the fifth and the sixth embodiments are described as follows. In the fifth embodiments, the UE is capable on receiving an indicator, e.g. an advanced UE. The fifth embodiment has less signaling overhead than the sixth embodiment.

In the sixth embodiment, the UE is not capable on receiving an indicator, e.g. a legacy UE. The activation and deactivation SPS CSI report configurations can change the measurement resource, e.g. measurement resource for different mode. The activation and deactivation is UE-specific comment, e.g. MAC-CE or DCI. The legacy UE is supported although the signaling overhead is larger than the fifth embodiment.

Therefore, in the fifth and the sixth embodiments, mode change can be transparent to UEs, e.g. advanced and legacy UEs, and the method of communication operation is backward compatible.

In the fifth and the sixth embodiments, the at least one resource is associated with the mode. For example, in the sixth embodiment, the at least one resource transmitted in slots n₀ and n₁ is related to the first CSI-RS resource (e.g. CSI-RS #0), wherein the first CSI-RS resource is associated with the mode 0, and the at least one resource configured transmitted in slot n₅ and slot n₆ is related to the second CSI-RS resource (e.g. CSI-RS #4), wherein the second CSI-RS resource is associated with the mode 1. CSI report corresponding to the at least one resource is performed.

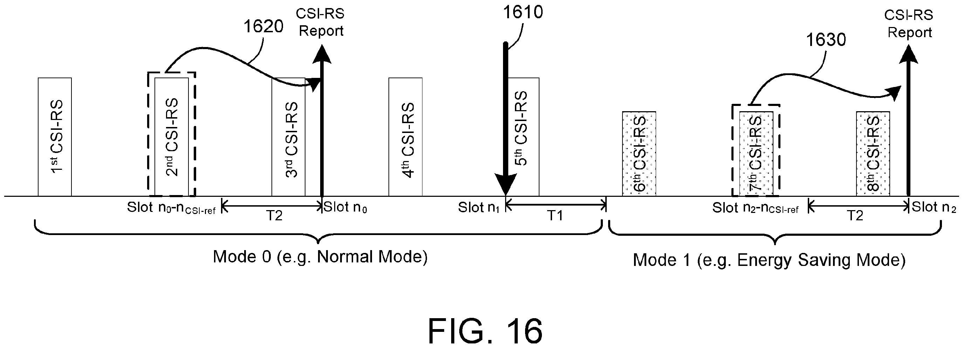

FIG. 16 is a schematic diagram illustrating CSI report corresponding to CSI measurement, wherein CSI-RS measurement computed by only one CSI-RS transmission occasion according to a seventh embodiment of the disclosure. Referring to FIG. 16, CSI report corresponding to the most recent resource is performed.

To be specific, CSI report is transmitted in slot n₀. The UE reports the measurement result only on the most recent CSI-RS resource, i.e. the second CSI-RS resource, which is no later than the reference CSI-RS resource, as shown as symbol 1620 in FIG. 16. An indicator 1610 is received in slot n₁, which indicates the following CSI report carrying measurement result of the energy saving mode. CSI-RS transmission power is changed after slot n₁+T1. CSI report is transmitted in slot n₂. The UE reports the measurement result only on the most recent CSI-RS resource, i.e. the seventh CSI-RS resource, which is no later than the reference CSI-RS resource, as shown as symbol 1630 in FIG. 16.

In the present embodiment, the UE receives a 'timeRestrictionForChannelMeasurement' for channel measurement. If the UE is signaled to be operated in the energy saving mode, e.g. the signaling can be higher layer or physical layer signaling, 'timeRestrictionForChannelMeasurements' in the CSI report configuration is set to 'Configured' or `NotConfigured'. The 'timeRestrictionForChannelMeasurement' is configured via higher layer signaling or physical layer signaling. As shown in FIG. 16, if the 'timeRestrictionForChannelMeasurement' is set to 'Configured', UE shall derive the channel measurements for computing CSI reported based on only the most recent CSI-RS resource associated with the CSI resource setting. If the 'timeRestrictionForChannelMeasurement' is set to 'NotConfigured', UE shall derive the channel measurements for computing CSI reported based on more than one CSI-RS resource associated with the CSI resource setting, as shown in FIG. 9. If there is no valid downlink slot for the CSI reference resource corresponding to a CSI report setting in a serving cell, CSI reporting can be omitted for the serving cell in uplink slot n.

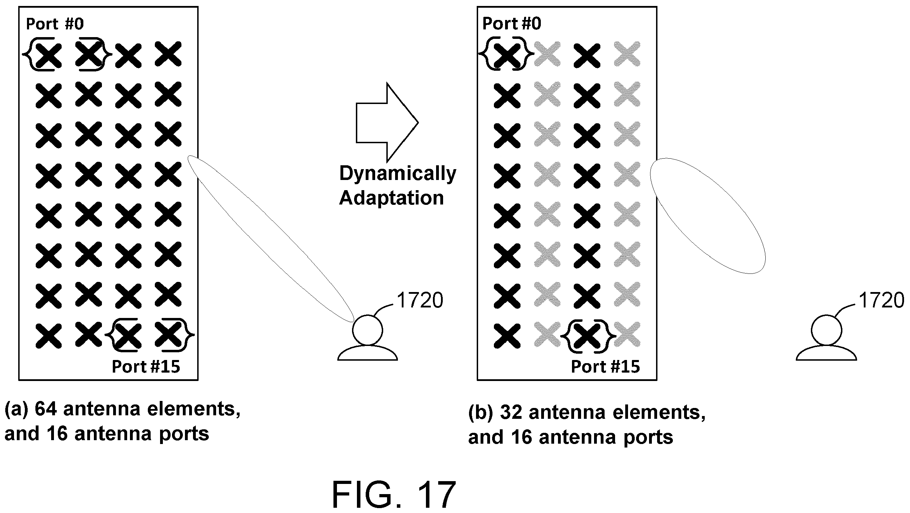

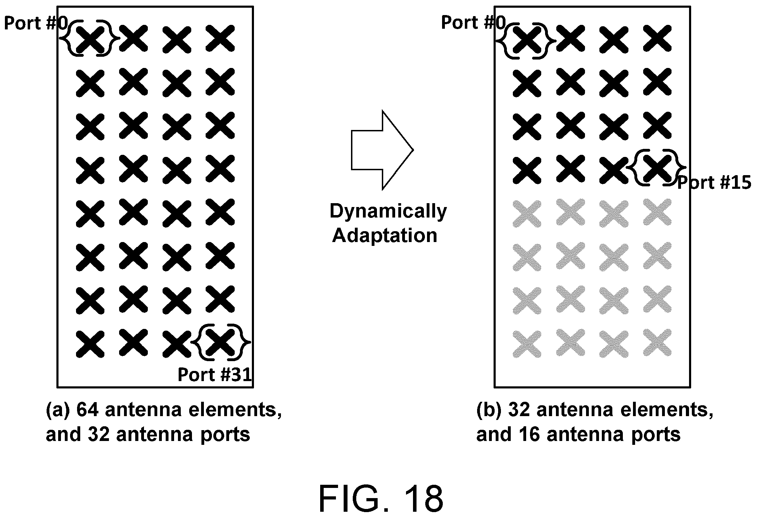

FIG. 17 and FIG. 18 are schematic diagrams illustrating dynamic adaptation of number of spatial elements. For network energy saving, dynamic adaptation of number of spatial elements can be considered. However, dynamic behavior may suffer some problems, e.g. coverage loss due to antenna element adaptation or antenna port adaptation, which should be solved. A method of communication operation performed by a user equipment provided in the disclosure can at least solve said problems.

Different number of CSI-RS antenna ports may lead to different payload size of reporting field. How to handle CSI report for different modes will be described in the following embodiments.

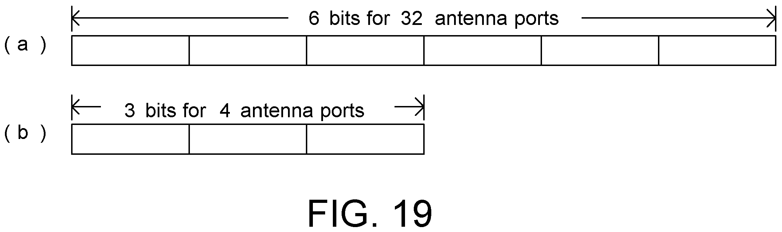

FIG. 19 is a schematic diagrams illustrating handling CSI report payload size due to different antenna port number. If 32 antenna ports with (N₁, N₂)=(16, 1) and (O₁, O₂)=(4, 1) is applied, the information field for wideband PMI is 6 bits, as shown as (a) in FIG. 19, wherein the values of (N₁, N₂) are related to antenna port number and the values of (O₁, O₂) are corresponding to (N₁, N₂). If 4 antenna ports with (N₁, N₂)=(2, 1) and (O₁, O₂)=(4, 1) is applied, the information field for wideband PMI is 3 bits, as shown as (b) in FIG. 19.

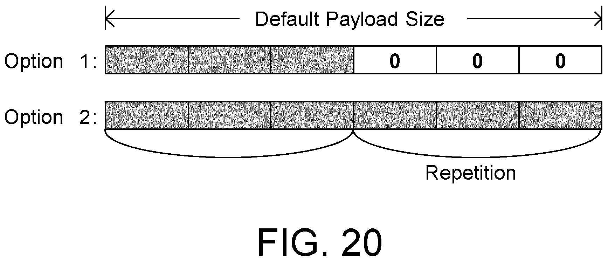

FIG. 20 is a schematic diagrams illustrating CSI report payload size according to an eighth embodiment of the disclosure. Referring to FIG. 20, the UE receives a set of mode, and the set of mode comprises at least one mode. Each of the modes is related to an antenna port number. The set of mode is configured via higher layer signaling or physical layer signaling.

The UE determines a payload size for reporting at least one field of CSI report (e.g. an information field for wideband PMI) corresponding to at least one mode in the set of mode. For example, a default payload size of reporting field is determined according to the mode with largest antenna port numbers. When the mode with smaller antenna port numbers is applied, the following options can be considered: option 1: filling with default/predetermined/preconfigured/fixed bits, e.g. filling with ones or zeros; and option 2: repetition can be applied.

To be specific, for option 1, the payload size is filled with a number of default, predetermined, preconfigured or fixed bits in the CSI report if the antenna port number of the mode is smaller than the largest antenna port number within the set of mode. For option 2, repetition is performed if the antenna port number of the mode is smaller than the largest antenna port number within the set of mode. For example, for CSI report configuration associated with the mode 0 (32 antenna ports) and the mode 1 (4 antenna ports), the default payload size is 6, which is determined according to the mode 0. If the mode 1 is applied, the two options as illustrated in FIG. 20 are considered.

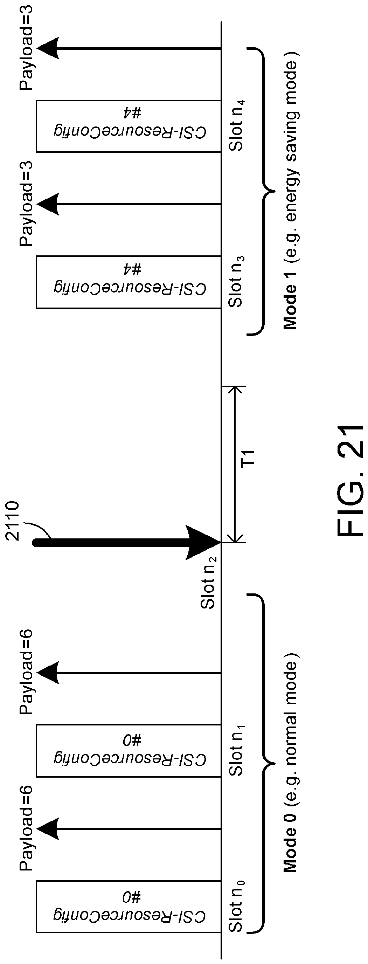

FIG. 21 is a schematic diagrams illustrating CSI report payload size according to a ninth embodiment of the disclosure. Referring to FIG. 21, a payload size of reporting field is determined according to the CSI report configuration. A field/bit or RRC IE can be used for indicating the mode of the CSI report configuration. If the CSI report configuration is not associated with a mode, a default, predetermined, preconfigured or fixed mode is used for determining the payload size.

As shown in FIG. 13, *CSI-ReportConfig* specifies which of *CSI-ResourceConfig* to be used for channel measurement wherein the *CSI-ReportConfig* is associated with a mode. CSI report configuration #0 is associated with the mode 0. CSI resource configuration #0 is transmitted in the mode 0 in slots n₀ and n₁, and the payload size corresponding to mode 0 is determined as 6. CSI report configuration #4 is associated with the mode 1. The indicator 2110 for indicating the mode 1 is received in slot n₂. And thus, CSI resource configuration is changed after slot n₂+T1. CSI resource configuration #4 is transmitted in slot n₃ and n₄, and the payload size corresponding to mode 1 is determined as 3.

In the ninth embodiment, a payload size is determined for reporting at least one field of CSI report. The payload size for reporting at least one field of CSI report (e.g. an information field for wideband PMI) is associated with the mode, and the mode is related to an antenna port number.

In this disclosure, network can apply more than one mode. Different modes may have different properties, e.g. presence of signal, periodicity of signal, transmission power, antenna port number, antenna element number, etc. A mode can be an energy mode, a power mode, a sleep mode, etc. For simplicity, the term "mode" is used in this disclosure, but the other naming (e.g. level, status) is not precluded. For simplicity, two modes are used in this disclosure, but more than two modes (e.g. 3 or 4 modes) are not precluded.

In this disclosure, the mode may be indicated by the indicator, which is transmitted via UE-specific, cell-specific, or group-UE specific signaling, or carried by MAC-CE or DCI (e.g. DCI in USS, CSS, or Type-3 CSS). The indicator comprises a cell-ID related information (e.g. indicates which cell support/apply/adopt/change the mode after receiving the indicator). Combinations of embodiments disclosed in this disclosure should not be precluded.

In this disclosure, the gNB determines the downlink EPRE. For the downlink SS/PBCH SSS EPRE can be derived from the SS/PBCH downlink transmission power given by the parameter *ss-PBCH-BlockPower* provided by higher layer. The downlink CSI-RS EPRE can be derived from the SS/PBCH downlink transmission power given by the parameter *ss-PBCH-BlockPower* provided by higher layer, and CSI-RS power offset given by the parameter *powerControlOffsetSS* provided by higher layers.

In this disclosure, different values of *ss-PBCH BlockPower* can be applied for different modes. For example, *ss-PBCH-BlockPower mode0* is applied for the mode 0, and *ss-PBCH-BlockPower _model* is applied for the mode 1. In addition, different values of *powerControlOffsetSS* can be applied for different modes. For example, *powerControlOffsetSS mode0* is applied for the mode 0, and *powerControlOffsetSS _model* is applied for the mode 1.

In this document, for example, as disclosed in the fifth, the sixth and the ninth embodiments, when the UE receives an indicator, the UE may determine whether to change a current active BWP of a serving cell (e.g., according to the indicator).

For example, the UE may change current active BWP to a first BWP when the indicator indicating current mode of the serving cell would be changed from mode 0 (e.g., normal mode) to mode 1 (e.g., energy saving mode). The first BWP may be a dormancy BWP, a default BWP or a pre-configured BWP configured by gNB (e.g., via RRC signaling). The UE may change current active BWP to a second BWP when the indicator indicating current mode of the serving cell would be changed from mode 1 (e.g., energy saving mode) to mode 0 (e.g., normal mode). The second BWP may be a first active BWP or a pre-configured BWP configured by gNB (e.g., via RRC signaling).

In summary, in the embodiments of the disclosure, the method of communication operation is provided to solve problems that dynamic adaptation of transmission power and/or number of spatial elements may suffer. How to perform CSI measurement and report when there are more than one modes and how to handle CSI report are provided. In some embodiments, CSI report may be dropped to save UE transmission power. In some embodiments, no dropping CSI report is beneficial, and CSI report may be always transmitted to prevent misunderstanding between network and UE. The reliability is increased. In some embodiments, mode change can be transparent to UEs, e.g. advanced and legacy UEs, and the method of communication operation is backward compatible.

## Claims

1. A method of communication operation performed by a user equipment (UE) (320), the method comprising:
receiving a configuration (S400), wherein the configuration comprises a resource setting;
receiving at least one resource (S410), wherein the at least one resource is configured via the configuration; and
performing channel state information (CSI) measurement (S420), wherein CSI measurement is related to the at least one resource.

2. The method of claim 1, further comprising:
performing CSI report corresponding to the CSI measurement.

3. The method of claim 1, further comprising:
receiving an indicator (910, 1010, 1110, 1210, 1410, 1610, 2110), wherein the indicator (910, 1010, 1110, 1210, 1410, 1610, 2110) comprises a mode.

4. The method of claim 3, wherein the mode is set to be a default mode if the indicator (910, 1010, 1110, 1210, 1410, 1610, 2110) is not received.

5. The method of claim 1, wherein the at least one resource comprises channel state information (CSI) - reference signal (RS) resource, non-zero power (NZP) CSI-RS resource and CSI - interference measurement (IM) resource.

6. The method of claim 3, wherein the mode comprises an indication of power value, an indication of power level, an indication of antenna port number, an indication of antenna port subset, an indication of antenna element number, an indication of antenna element subset, a Cell-ID related information, a search space (SS) set index, a control resource set (CORESET) identity (ID), a search space configuration, and a first transmission configuration indication (TCI) state.

7. The method of claim 3, wherein the mode comprises a spatial adaptation pattern, wherein the spatial adaptation pattern comprises an indication of power value, an indication of power level, an indication of antenna port number, an indication of antenna port subset, an indication of antenna element number, an indication of antenna element subset, a Cell-ID, a SS set index, a CORESET ID, a search space configuration, and a TCI state.

8. The method of claim 1, wherein the at least one resource is associated with a mode or more than one modes.

9. The method of claim 2, further comprising:
performing CSI report corresponding to at least one valid resource after the UE (320) receives an indicator (910, 1010, 1110, 1210, 1410, 1610, 2110).

10. The method of claim 2, further comprising:
stopping performing CSI report if there is no valid resource after the UE (320) receives an indicator (910, 1010, 1110, 1210, 1410, 1610, 2110).

11. The method of claim 2, further comprising:
performing CSI report corresponding to at least one valid resource if there is no valid resource after the UE (320) receives an indicator (910, 1010, 1110, 1210, 1410, 1610, 2110).

12. The method of claim 2, further comprising:
performing CSI report corresponding to the at least one resource.

13. The method of claim 2, further comprising:
performing CSI report corresponding to the most recent resource.

14. The method of claim 1, further comprising:
receiving a 'timeRestrictionForChannelMeasurement' for channel measurement, wherein the 'timeRestrictionForChannelMeasurement' is set to 'Configured' or `NotConfigured'.

15. The method of claim 2, further comprising:
receiving a set of mode, wherein the set of mode comprises at least one mode; and
determining a payload size for reporting at least one field of CSI report, wherein the payload size is associated with the set of mode.

16. The method of claim 15, wherein the least one field of CSI report is an information field for wideband PMI.

17. The method of claim 15, wherein each mode of the set of mode is related to an antenna port number.

18. The method of claim 15, wherein the payload size is determined according to a largest antenna port number within the set of mode.

19. The method of claim 15, further comprising:
filling with a number of default, predetermined, preconfigured or fixed bits in the CSI report if the antenna port number of the mode is smaller than the largest antenna port number within the set of mode.

20. The method of claim 15, further comprising:
performing repetition if the antenna port number of the mode is smaller than the largest antenna port number within the set of mode.

21. The method of claim 2, further comprising:
determining a payload size for reporting at least one field of CSI report, wherein the payload size for reporting at least one field of CSI report is associated with the mode.

22. An apparatus (320) for a communication operation, the apparatus (320) comprising:
one or more receivers (322);
one or more transmitters (324);
a memory (326) storing instructions; and
a processor (328) executing the instructions, wherein execution of the instructions by the processor (328) causes the processor to:
receive a configuration (S400), wherein the configuration comprises a resource setting;
receive at least one resource (S410), wherein the at least one resource is configured via the configuration; and
perform channel state information (CSI) measurement (S420), wherein CSI measurement is related to the at least one resource.

23. The apparatus (320) of claim 22, wherein execution of the instructions by the processor (328) causes the processor (328) to further:
perform CSI report corresponding to the CSI measurement.

24. The apparatus (320) of claim 22, wherein execution of the instructions by the processor (328) causes the processor (328) to further:
receive an indicator (910, 1010, 1110, 1210, 1410, 1610, 2110), wherein the indicator (910, 1010, 1110, 1210, 1410, 1610, 2110) comprises a mode.

25. The apparatus (320) of claim 24, wherein the mode comprises an indication of power value, an indication of power level, an indication of antenna port number, an indication of antenna port subset, an indication of antenna element number, an indication of antenna element subset, a Cell-ID related information, a search space (SS) set index, a control resource set (CORESET) identity (ID), a search space configuration, and a first transmission configuration indication (TCI) state.

26. The apparatus (320) of claim 24, wherein the mode comprises a spatial adaptation pattern, wherein the spatial adaptation pattern comprises an indication of power value, an indication of power level, an indication of antenna port number, an indication of antenna port subset, an indication of antenna element number, an indication of antenna element subset, a Cell-ID, a SS set index, a CORESET ID, a search space configuration, and a TCI state.

27. The apparatus (320) of claim 24, wherein the mode is set to be a default mode if the indicator (910, 1010, 1110, 1210, 1410, 1610, 2110) is not received.

28. The apparatus (320) of claim 22, wherein the at least one resource is associated with a mode or more than one modes.

29. The apparatus (320) of claim 22, wherein execution of the instructions by the processor (328) causes the processor (328) to further:
perform CSI report corresponding to at least one valid resource after the apparatus (320) receives an indicator (910, 1010, 1110, 1210, 1410, 1610, 2110).

30. The apparatus (320) of claim 23, wherein execution of the instructions by the processor (328) causes the processor (328) to further:
receive a set of mode, wherein the set of mode comprises at least one mode; and determines a payload size for reporting at least one field of CSI report, wherein the payload size is associated with the set of mode.
